# EUROPEAN PATENT SPECIFICATION

(11) **EP 4 484 179 B1**
(45) Date of publication and mention of the grant of the patent: **31.12.2025**
(21) Application number: 24181437.5
(22) Date of filing: 11.06.2024
(51) Int. Cl.: B60C 11/03, B60C 11/12, B60C 11/13

(54) **TIRE**
REIFEN
PNEUMATIQUE

(30) Priority: 26.06.2023 JP 2023104389
(43) Date of publication of application: 01.01.2025
(73) Proprietor: Sumitomo Rubber Industries, Ltd., Kobe-shi, Hyogo-ken 651-0072 (JP)
(72) Inventor: SAKUMA, SHUNYA, Kobe-shi, 651-0072 (JP); ABE, Shotaro, Kobe-shi, 651-0072 (JP); ARAI, Mahito, Kobe-shi, 651-0072 (JP); KNISPEL, Oliver, 63456 Hanau (DE); KUNKEL, Daniel, 63456 Hanau (DE); NAKAJIMA, Koichi, Kobe-shi, 651-0072 (JP)
(74) Representative: Manitz Finsterwald Patent- und Rechtsanwaltspartnerschaft mbB

(56) References cited:
- EP-A1- 2 311 656
- EP-A1- 2 631 090
- EP-A1- 3 305 555
- EP-A1- 3 647 077
- EP-A1- 4 151 431
- JP-A- 2012 051 513

## Description

### BACKGROUND OF THE INVENTION

### Field of the Invention

The present invention relates to a tire.

### Background Art

JP 2018-052422 A proposes, as an all-season tire, a pneumatic tire having a plurality of oblique lateral grooves and a plurality of joint grooves provided on a tread portion. Each of the oblique lateral grooves extends inward in the tire axial direction, so as to be inclined toward one side in the tire circumferential direction, from an outer side with respect to a ground-contact end to an inner end in the vicinity of the tire equator without crossing the tire equator. Each of the joint grooves connects between the oblique lateral grooves adjacent to each other in the tire circumferential direction. This pneumatic tire is expected to achieve both steering stability on a dry road surface and steering stability on a snowy road surface at a high level by means of the above-described oblique lateral grooves and joint grooves.

EP 3 305 555 A1 discloses a tire according to the preamble of claim 1. Other related tires are disclosed in EP 2 311 656 A1, JP 2012-051513 A, EP 4 151431 A1, EP 2 631 090 A1, and EP 3 647 077 A1.

In recent years, with enhancement of the performance of vehicles, further improvement of the on-snow performance of tires has been required, in particular, improvement of snow traction has been required. Meanwhile, for tires, it is also necessary to take steering stability on a dry road surface into consideration.

The present invention has been made in view of the above circumstances, and a main object of the present invention is to provide a tire having improved snow traction while maintaining steering stability on a dry road surface.

### SUMMARY OF THE INVENTION

The present invention is directed to a tire having the features of claim 1.

As a result of adopting the configuration, the tire according to the present invention can have improved snow traction while maintaining steering stability on a dry road surface.

### BRIEF DESCRIPTION OF THE DRAWINGS

FIG. 1 is a development view of a tread portion of a tire of one embodiment of the present invention;
FIG. 2 is an enlarged perspective view showing first land portions and first inclined grooves in FIG. 1;
FIG. 3 is an enlarged plan view of the first land portion and the first inclined grooves in FIG. 1;
FIG. 4 is a cross-sectional view of FIG. 3 taken along a line A-A;
FIG. 5 is an enlarged view of an end edge of one recess in FIG. 3;
FIG. 6 is a cross-sectional view of FIG. 3 taken along a line B-B;
FIG. 7 is a cross-sectional view of FIG. 3 taken along a line C-C; and
FIG. 8 is a development view of a tread portion of a tire of Comparative Example 1.

### DETAILED DESCRIPTION

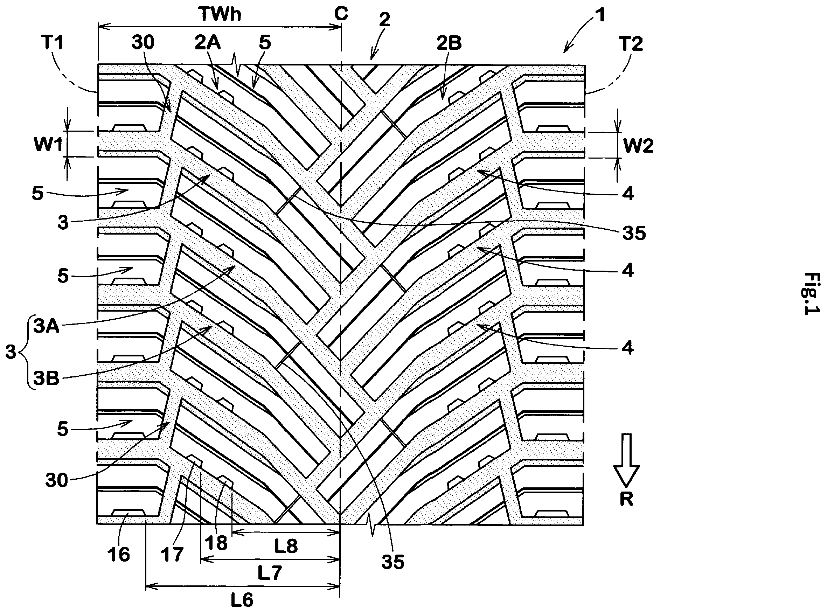

Hereinafter, an embodiment of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. FIG. 1 is a development view of a tread portion 2 of a tire (hereinafter sometimes referred to simply as "tire") 1 of the present embodiment. As shown in FIG. 1, the tire 1 of the present embodiment is a tire for a passenger car, and is an all-season tire designed for running on a snowy road in addition to running on a dry road surface. However, the tire 1 of the present invention is not limited to such a mode, and may be, for example, a heavy duty tire.

The tire 1 of the present invention includes the tread portion 2 having a designated rotation direction R. The rotation direction R is indicated, for example, on each sidewall portion (not shown) by characters or marks.

The tread portion 2 of the tire 1 of the present embodiment includes a first tread end T1 and a second tread end T2. In each drawing of the present specification, a tread end on the left side of a tire equator C is defined as the first tread end T1, and a tread end on the right side of the tire equator C is defined as the second tread end T2. The tread portion 2 includes a first tread portion 2A on the first tread end T1 side with respect to the tire equator C and a second tread portion 2B on the second tread end T2 side with respect to the tire equator C. The first tread portion 2A and the second tread portion 2B are substantially line-symmetric with respect to the tire equator C except that the first tread portion 2A and the second tread portion 2B are displaced in the tire circumferential direction. Therefore, each configuration of the first tread portion 2A can be applied to the second tread portion 2B.

The first tread end T1 and the second tread end T2 are outermost ground-contact positions in the tire axial direction when 70% of a standardized load is applied to the tire 1 in a standardized state and the tire 1 is brought into contact with a flat surface at a camber angle of 0°.

In the case of a pneumatic tire for which various standards are defined, the "standardized state" is a state where the tire is fitted on a standardized rim and inflated to a standardized internal pressure and no load is applied to the tire. In the case of a non-pneumatic tire or a tire for which various standards are not defined, the standardized state means a standard use state, corresponding to the purpose of use of the tire, where no load is applied to the tire. In the present specification, unless otherwise specified, dimensions and the like of components of the tire are values measured in the standardized state. In the present specification, unless otherwise specified, a known method can be used as appropriate as a method for measuring the above dimensions.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire for which various standards are not defined, the "standardized load" refers to the maximum load applicable when the tire is used, according to the above-described standards.

The tread portion 2 includes a plurality of first inclined grooves 3 and a plurality of second inclined grooves 4. In FIG. 1, these grooves and a longitudinal through groove 30 described later are dotted. Each first inclined groove 3 extends at least from the first tread end T1 toward the tire equator C so as to be inclined toward the leading edge side in the rotation direction R. Each second inclined groove 4 extends at least from the second tread end T2 toward the tire equator C so as to be inclined toward the leading edge side in the rotation direction R. The second inclined groove 4 has substantially the same configuration as the first inclined groove 3, and the configuration of the first inclined groove 3 can be applied to the second inclined groove 4.

From the viewpoint of ensuring wet performance, a groove width W1 of each first inclined groove 3 and a groove width W2 of each second inclined groove 4 are, for example, not less than 3 mm, preferably 4.0 to 7.0 mm, and more preferably 4.5 to 6.0 mm. In addition, the depths of these inclined grooves are, for example, 4.0 to 8.5 mm and preferably 5.0 to 8.0 mm.

Each first inclined groove 3 of the present embodiment extends from a position (not shown in FIG. 1) on the outer side in the tire axial direction with respect to the first tread end T1. In addition, each first inclined groove 3 crosses the center position in the tire axial direction between the first tread end T1 and the tire equator C and extends to the vicinity of the tire equator C. The first inclined grooves 3 include, for example, transverse first inclined grooves 3A extending to a position located beyond the tire equator C, and non-transverse first inclined grooves 3B terminating without crossing the tire equator C. In the present embodiment, the transverse first inclined grooves 3A and the non-transverse first inclined grooves 3B are provided alternately in the tire circumferential direction.

The distance in the tire axial direction from the inner end on the tire equator C side of each first inclined groove 3 to the tire equator C is, for example, not greater than 15% of a tread half width TWh. However, the present invention is not limited to such a mode. The tread half width TWh corresponds to the distance in the tire axial direction from the tire equator C to the first tread end T1 in the standardized state.

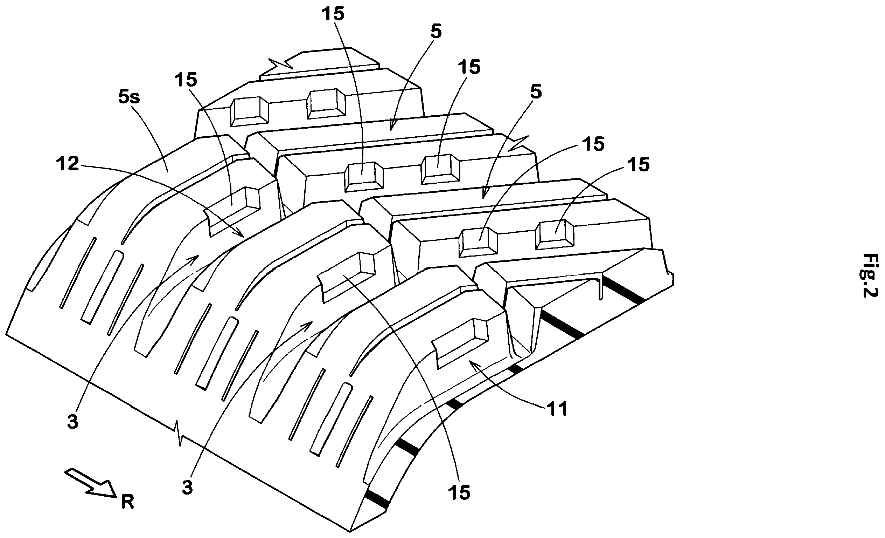

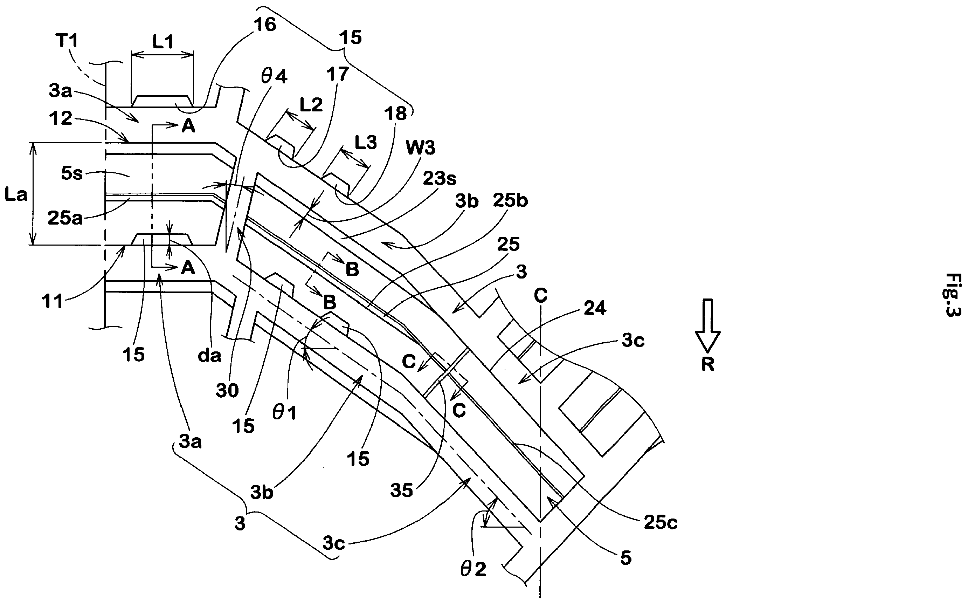

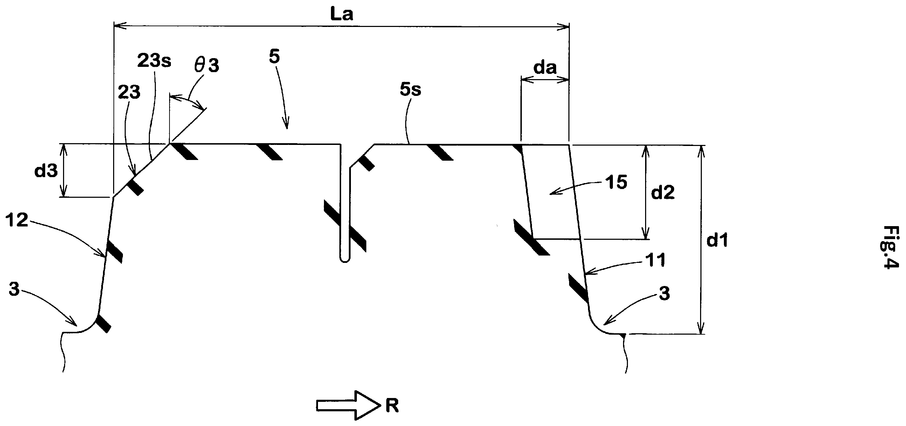

The tread portion 2 of the present invention includes a plurality of first land portions 5 demarcated by the plurality of first inclined grooves 3. FIG. 2 shows an enlarged perspective view of the first land portions 5 and the first inclined grooves 3. FIG. 3 shows an enlarged plan view of two first inclined grooves 3 and one first land portion 5. FIG. 4 shows a cross-sectional view of FIG. 3 taken along a line A-A. As shown in FIG. 2 to FIG. 4, each of the plurality of first land portions 5 includes a tread surface 5s, a first side wall 11 on the leading edge side in the rotation direction R, and a second side wall 12 on the trailing edge side in the rotation direction R.

At least one of the plurality of first land portions 5 is provided with at least one recess 15 formed by locally recessing the first side wall 11. The recess 15 is open in the tread surface 5s.

As shown in FIG. 3, in the plan view of the first land portion 5, a maximum recessed amount da of the recess 15 in a direction orthogonal to the longitudinal direction of the first inclined groove 3 is 10% to 25% of a maximum length La of the first land portion 5 in the direction orthogonal to the longitudinal direction. Accordingly, the tire 1 of the present invention can have improved snow traction while maintaining steering stability on a dry road surface. The reasons for this are as follows.

In the tire 1 of the present invention, since the above-described recess 15 is provided in the first side wall 11 which is a side wall on the leading edge side of the rotation direction R, a hard snow column can be formed by the recess 15 when the first land portion 5 comes into contact with the ground during running on snow. In addition, excellent snow traction is exhibited when the snow column is sheared.

Furthermore, in the present invention, since the maximum recessed amount da of the recess 15 is specified as 10% to 25% of the maximum length La of the first land portion 5, steering stability on a dry road surface (hereinafter sometimes referred to simply as "steering stability") can be maintained while the above-described effect is achieved.

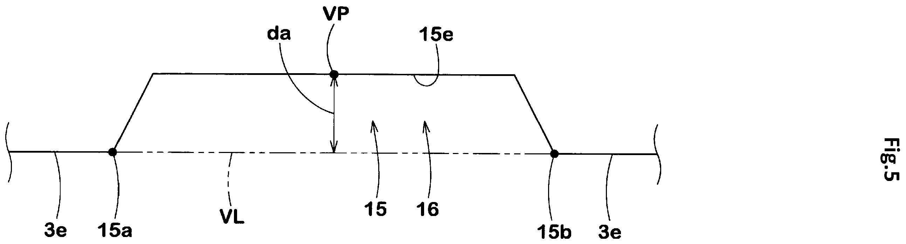

The maximum recessed amount da of the recess 15 is measured by the following procedure. FIG. 5 shows an enlarged view of an end edge 15e of one recess 15 shown in FIG. 3. The recess 15 in FIG. 5 corresponds to a first recess 16 described later. As shown in FIG. 5, points of intersection of the groove edge 3e of the first inclined groove 3 and the end edge 15e on the tread surface 5s of the recess 15 are defined as a first end 15a and a second end 15b of the recess 15. In addition, the distance from a virtual straight line VL connecting the first end 15a and the second end 15b to a virtual point VP farthest from the virtual straight line VL on the end edge 15e of the recess 15 (distance in a direction orthogonal to the virtual straight line VL) is the maximum recessed amount da. In the case where the end edge 15e of the recess 15 includes a portion including the virtual point VP and extending parallel to the virtual straight line VL, the center position in the longitudinal direction of the portion extending parallel to the virtual straight line VL is identified as the virtual point VP.

As shown in FIG. 4, the maximum length La of the first land portion 5 corresponds to the distance from the end on the first side wall 11 side to the end on the second side wall 12 side of the tread surface 5s of the first land portion 5 in a state where the recess 15 is completely filled in a transverse cross-section (corresponding to FIG. 4), of the first land portion 5, orthogonal to the longitudinal direction of the first inclined groove 3 and passing through the virtual point VP (shown in FIG. 5). In the case where a chamfered portion 23 (described in detail later) is provided on the second side wall 12 side as in the present embodiment, the inner end in the tire radial direction of the chamfered portion 23 is defined as the end on the second side wall 12 side of the tread surface 5s.

In a more preferable mode, the maximum recessed amount da of the recess 15 is 15% to 20% of the maximum length La of the first land portion 5. In addition, the maximum recessed amount da is preferably 1.0 to 2.5 mm and more preferably 1.5 to 2.0 mm. Accordingly, the above-described effects are reliably achieved.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 3, an angle of each first inclined groove 3 with respect to the tire axial direction increases toward the tire equator C side. Accordingly, each first inclined groove 3 includes an outer grove portion 3a, a center groove portion 3b, and an inner groove portion 3c which have different angles with respect to the tire axial direction. The outer grove portion 3a extends at least linearly inward in the tire axial direction from the first tread end T1. The angle of the outer grove portion 3a with respect to the tire axial direction is, for example, not greater than 10°. The outer grove portion 3a of the present embodiment extends parallel to the tire axial direction. The length of the outer grove portion 3a (this length is a so-called periphery length, and the same applies below) is 10% to 25% of the total length of the first inclined groove 3.

The center groove portion 3b is inclined at a larger angle than the outer grove portion 3a with respect to the tire axial direction and extends linearly. An angle θ1 of the center groove portion 3b with respect to the tire axial direction is, for example, 25 to 35°. The length of the center groove portion 3b is 30% to 40% of the total length of the first inclined groove 3. The inner groove portion 3c is inclined at a larger angle than the center groove portion 3b with respect to the tire axial direction and extends linearly. An angle θ2 of the inner groove portion 3c with respect to the tire axial direction is, for example, 40 to 50°. The length of the inner groove portion 3c is 40% to 50% of the total length of the first inclined groove 3. Such a first inclined groove 3 having the outer grove portion 3a, the center groove portion 3b, and the inner groove portion 3c serves to enhance wet performance.

It is preferable that a plurality of recesses 15 are provided in each first land portion 5. In the present embodiment, each of the plurality of recesses 15 provided in one first land portion 5 has a feature that the maximum recessed amount da is 10% to 25% of the maximum length La of the first land portion 5. Accordingly, the above-described effects are reliably achieved.

In the present embodiment, the plurality of recesses 15 provided in one first land portion 5 include the first recess 16, a second recess 17, and a third recess 18. The first recess 16 is provided closest to the first tread end T1 among the plurality of recesses 15, and is in contact with the outer grove portion 3a of the first inclined groove 3 in the present embodiment. The second recess 17 is located on the tire equator C side with respect to the first recess 16. The third recess 18 is located on the tire equator C side with respect to the second recess 17. The second recess 17 and the third recess 18 are in contact with the center groove portion 3b of the first inclined groove 3.

The first recess 16 is preferably away from the first tread end T1 and the longitudinal through groove 30 described later by 5.0 mm or more, for example. In addition, the second recess 17 is preferably away from the longitudinal through groove 30 by 5.0 mm or more. Moreover, the third recess 18 is preferably away from the second recess 17 by 5.0 mm or more. Accordingly, uneven wear of the first land portion 5 is suppressed.

As shown in FIG. 1, a distance L6 in the tire axial direction from the tire equator C to the first recess 16 is 75% to 85% of the tread half width TWh. Similarly, a distance L7 in the tire axial direction from the tire equator C to the second recess 17 is 50% to 60% of the tread half width TWh. A distance L8 in the tire axial direction from the tire equator C to the third recess 18 is 40% to 50% of the tread half width TWh.

As shown in FIG. 3, the maximum length in the longitudinal direction of the recess 15 provided closest to the first tread end T1 (in the present embodiment, the first recess 16) among the plurality of recesses 15 provided in one first land portion 5 is larger than the maximum length in the longitudinal direction of the other recess 15 (in the present embodiment, the second recess 17 and the third recess 18). Specifically, the maximum length L1 of the first recess 16 is 150% to 250% of the maximum length L2 of the second recess 17. In addition, the maximum length L2 of the second recess 17 is 80% to 120% of the maximum length L3 of the third recess 18, and in the present embodiment, these lengths are equal to each other. Such a plurality of recesses 15 serve to enhance steering stability and snow traction in a well-balanced manner.

The maximum length L1 of the first recess 16 is, for example, 3.0 to 12.0 mm and preferably 5.0 to 10.0 mm. The maximum length L2 of the second recess 17 and the maximum length L3 of the third recess 18 are, for example, 3.0 to 8.0 mm and preferably 4.0 to 7.0 mm.

As shown in FIG. 5, in the plan view of the first land portion 5, the recess 15 preferably includes a portion whose length in the longitudinal direction continuously decreases from the first side wall 11 toward the second side wall 12 (shown in FIG. 3). Accordingly, snow is likely to be strongly compacted in the recess 15, so that snow traction is further improved.

The opening shape of the recess 15 in the tread surface 5s of the first land portion 5 is, for example, trapezoidal. However, the present invention is not limited to such a shape, and the opening shape may be triangular or semi-circular.

As shown in FIG. 2 and FIG. 5, the recess 15 of the present embodiment includes three planar inner walls extending inward in the tire radial direction from each linearly extending end edge. Accordingly, the recess 15 has a trapezoidal opening shape even in a state where the tread portion 2 is worn.

In the plan view of the first land portion 5, the opening area of one recess 15 is preferably not less than 2.5% and more preferably not less than 3.0% of the area of the tread surface 5s (shown in FIG. 3) of one first land portion 5, and is preferably not greater than 5.0% and more preferably not greater than 4.5% of the area of the tread surface 5s. Accordingly, steering stability and snow traction are improved in a well-balanced manner.

From the same viewpoint, as shown in FIG. 4, a maximum depth d2 of the recess 15 from the tread surface 5s is not less than 50% and more preferably not less than 60% of a maximum depth d1 of the first inclined groove 3, and is preferably not greater than 80% and more preferably not greater than 70% of the maximum depth d1. The maximum depth d2 is 2.0 to 4.0 mm and preferably 2.5 to 3.5 mm.

At least one first land portion 5 has a chamfered portion 23 formed at least partially between the second side wall 12 and the tread surface 5s. The chamfered portion 23 is formed as a minute inclined surface 23s provided such that a ridge angle formed by the second side wall 12 and the tread surface 5s is eliminated. In the present embodiment, since such a chamfered portion 23 is formed on the second side wall 12 side, strain of the tread surface during braking on a dry road surface is suppressed, and an actual ground-contact area is increased, so that braking performance is improved.

An angle θ3 of the inclined surface 23s of the chamfered portion 23 with respect to a tire normal line is, for example, 30 to 60° and preferably 40 to 50°. In addition, a width W3 (shown in FIG. 3) of the inclined surface 23s in the plan view of the first land portion 5 is, for example, 0.5 to 2.0 mm and preferably 1.0 to 1.5 mm. Moreover, a depth d3 of the inclined surface 23s is, for example, 0.5 to 2.5 mm and preferably 1.0 to 2.0 mm.

As shown in FIG. 3, in the present embodiment, the above-described chamfered portion 23 (shown in FIG. 4, and the same applies below) is formed in portions, of the first land portion 5, which are in contact with the outer grove portion 3a and the center groove portion 3b of the first inclined groove 3. Accordingly, the chamfered portion 23 is provided in a region where the ground-contact pressure increases during braking, so that the above-described effects are reliably achieved.

In the plan view of the first land portion 5, the area of the chamfered portion 23 is 10% to 15% of the area of the tread surface 5s of one first land portion 5. Accordingly, steering stability and on-snow performance are improved in a well-balanced manner.

The second side wall 12 includes a non-chamfered portion 24 which is connected to the tread surface 5s without the chamfered portion 23. The non-chamfered portion 24 is provided in a portion, of the second side wall 12, which is in contact with the inner groove portion 3c. Accordingly, since the non-chamfered portion 24 is provided in a region close to the tire equator C, a high edge effect can be expected. Therefore, excellent snow traction can be expected.

Each first land portion 5 is provided with at least one inclined sipe 25 extending along the longitudinal direction of the first inclined groove 3. In the present embodiment, one first land portion 5 is provided with one inclined sipe 25. In the present specification, the "sipe" means a slit that has a small width and that has a width of less than 1.5 mm between two sipe walls in a sipe body thereof. In addition, the sipe body means a portion in which the two sipe walls extend substantially parallel to each other in the tire radial direction. The "substantially parallel" means that an angle between the two sipe walls is not greater than 10°. As described later, the sipe may be a sipe that has a chamfered portion formed at an edge thereof. In addition, the sipe may be a sipe that has a so-called flask bottom with an enlarged width at a bottom portion thereof.

In addition, by the sipe having the above-described width, when a ground-contact pressure acts on the first land portion 5, the two sipe walls can come into contact with each other, thereby maintaining the stiffness of the land portion. Meanwhile, in the present specification, the "groove" means a groove that can ensure a drainage path without groove walls coming into contact with each other even when a ground-contact pressure acts on the land portion and that has a groove width of at least 1.5 mm or more.

The inclined sipe 25 extends along the first inclined groove 3 from the first tread end T1 to an end portion on the tire equator C side of the first land portion 5. In a preferable mode, the inclined sipe 25 is provided in a central region out of three equal regions into which the first land portion 5 is divided in the direction orthogonal to the longitudinal direction of the first inclined groove 3 by two virtual lines extending along the longitudinal direction of the first inclined groove 3. Such an inclined sipe 25 can enhance snow traction while suppressing uneven wear of the first land portion 5.

The inclined sipe 25 includes an outer sipe portion 25a, a central sipe portion 25b, and an inner sipe portion 25c. The outer sipe portion 25a extends at least linearly inward in the tire axial direction from the first tread end T1. The outer sipe portion 25a of the present embodiment extends along the outer grove portion 3a of the first inclined groove 3, and these portions are parallel to each other in a preferable mode. In addition, the length of the outer sipe portion 25a is 80% to 120% of the length of the outer grove portion 3a.

The central sipe portion 25b is connected to the inner side in the tire axial direction of the outer sipe portion 25a and extends linearly. The central sipe portion 25b extends along the center groove portion 3b of the first inclined groove 3, and these portions are parallel to each other in a preferable mode. In addition, the length of the central sipe portion 25b is 80% to 120% of the length of the center groove portion 3b.

The inner sipe portion 25c is connected to the inner side in the tire axial direction of the central sipe portion 25b and extends linearly. The inner sipe portion 25c extends along the inner groove portion 3c of the first inclined groove 3, and these portions are parallel to each other in a preferable mode. In addition, the length of the inner sipe portion 25c is 80% to 120% of the length of the inner groove portion 3c. Such an inclined sipe 25 including the outer sipe portion 25a, the central sipe portion 25b, and the inner sipe portion 25c can reliably suppress uneven wear of the first land portion 5.

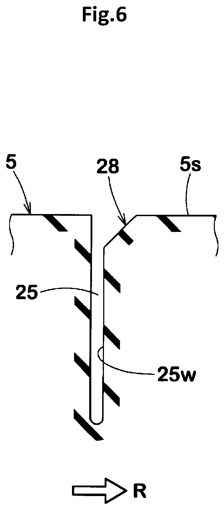

FIG. 6 shows a cross-sectional view of FIG. 3 taken along a line B-B. As shown in FIG. 6, the inclined sipe 25 has a chamfered portion 28 provided at an edge thereof on the leading edge side in the rotation direction R. The chamfered portion 28 is formed as a minute inclined surface provided such that a ridge angle formed by the tread surface 5s of the first land portion 5 and a sipe wall 25w is eliminated. An angle of this inclined surface with respect to a tire normal line is, for example, 40 to 50°. Such a chamfered portion 28 can enhance braking performance on a dry road surface.

In a preferable mode, the inclined sipe 25 has no chamfered portion provided at an edge thereof on the trailing edge side in the rotation direction R. Accordingly, the edge on the trailing edge side of the inclined sipe 25 can exert a large frictional force during running on snow, so that snow traction is improved.

As shown in FIG. 3, the above-described chamfered portion 28 (shown in FIG. 6) is provided in the outer sipe portion 25a and the central sipe portion 25b. On the other hand, no chamfered portion is provided at the edges on both sides of the inner sipe portion 25c. Accordingly, steering stability on a dry road surface and snow traction are improved in a well-balanced manner.

Each first land portion 5 of the present embodiment is provided with at least one longitudinal through groove 30 connecting the two first inclined grooves 3 adjacent to each other in the tire circumferential direction. In the present embodiment, one first land portion 5 is provided with one longitudinal through groove 30. The longitudinal through groove 30 of the present embodiment connects the center groove portions 3b of the first inclined grooves 3 adjacent to each other in the tire circumferential direction. The connection positions of the longitudinal through groove 30 to the center groove portions 3b are on the first tread end T1 side with respect to the center position in the longitudinal direction of the center groove portion 3b. Such a longitudinal through groove 30 makes it easier for a portion therearound to deform moderately, and can inhibit snow from clogging the first inclined groove 3. Accordingly, excellent on-snow performance is continuously exhibited.

The longitudinal through groove 30 is inclined in a direction opposite to that of the center groove portion 3b with respect to the tire axial direction. An angle θ4 of the longitudinal through groove 30 with respect to the tire circumferential direction is, for example, 5 to 15°. Such a longitudinal through groove 30 can exert a large snow column shearing force in the tire axial direction during running on snow.

The first land portion 5 of the present embodiment is provided with at least one through sipe 35 connecting the two first inclined grooves 3 adjacent to each other in the tire circumferential direction. In the present embodiment, one first land portion 5 is provided with one through sipe 35. The through sipe 35 of the present embodiment connects the inner groove portions 3c of the first inclined grooves 3 adjacent to each other in the tire circumferential direction. The distance in the tire axial direction from the tire equator C to the through sipe 35 is preferably 10% to 30% and more preferably 20 to 25% of the tread half width TWh (shown in FIG. 1). The connection positions of the through sipe 35 to the inner groove portions 3c are on the first tread end T1 side with respect to the center position in the longitudinal direction of the inner groove portion 3c. Such a through sipe 35 serves to enhance steering stability on a dry road surface and wet performance in a well-balanced manner.

As shown in FIG. 1, in the present embodiment, the first land portions 5 each provided with the through sipe 35 and the first land portions 5 each provided with no through sipe 35 are provided alternately in the tire circumferential direction. In each first land portion 5 provided with the through sipe 35, the recess 15 is provided only on the first tread end T1 side with respect to the through sipe 35. Accordingly, the stiffness around the tire equator C is maintained, so that steering stability on a dry road surface is improved.

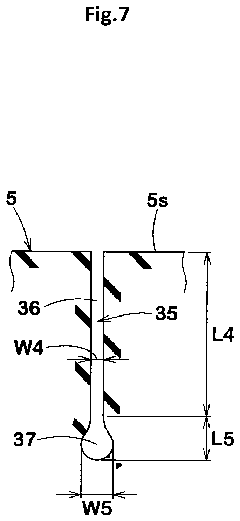

FIG. 7 shows a cross-sectional view of FIG. 3 taken along a line C-C. As shown in FIG. 7, the through sipe 35 includes a sipe body 36 and a wide portion 37. The sipe body 36 has a width W4 of less than 1.5 mm, and extends inward in the tire radial direction from the tread surface 5s in the present embodiment. The width W4 of the sipe body 36 is preferably 0.4 to 0.8 mm and more preferably 0.5 to 0.6 mm. In another embodiment, a chamfered portion may be provided between the tread surface 5s and the sipe body 36 (not shown). The wide portion 37 is connected to the inner side in the tire radial direction of the sipe body 36 and has a width W5 of not less than 1.5 mm. The width W5 of the wide portion 37 is preferably not greater than 2.5 mm and more preferably not greater than 2.0 mm. Such a through sipe 35 can suppress a decrease in wet performance due to wear.

From the viewpoint of reliably achieving the above-described effects while suppressing molding defects during vulcanization, the width W5 of the wide portion 37 of the through sipe 35 is preferably 2.5 to 4.0 times the width W4 of the sipe body 36.

In the present embodiment, the wide portion 37 is located inward of the bottom of the recess 15 (shown in FIG. 4) in the tire radial direction. Accordingly, even if the volume of the recess 15 decreases or the recess 15 disappears due to wear of the tread portion 2, the through sipe 35 including the wide portion 37 can remain, so that wet performance can be maintained. Specifically, a length L4 in the tire radial direction of the sipe body 36 is, for example, 3.5 to 5.5 mm and preferably 4.0 to 5.5 mm. In addition, a length L5 in the tire radial direction of the wide portion 37 is, for example, 1.5 to 2.5 mm and preferably 1.5 to 2.0 mm.

As shown in FIG. 1, the land ratio of the tread portion 2 of the present embodiment is, for example, 50% to 65% and preferably 55% to 60%. Accordingly, steering stability and snow traction are improved in a well-balanced manner. In the present specification, the "land ratio" corresponds to the ratio of an actual ground-contact area to a ground-contact area in a state where all the grooves and the sipes on the tread portion 2 are filled.

In the present embodiment, by each configuration having the features described above, the land ratio of the tread portion 2 in a virtual 80% worn state where the tread portion 2 is uniformly worn to 80% of the maximum depth d1 of the first inclined groove 3 is 100% to 110% of the land ratio of the tread portion 2 in a non-worn state. Accordingly, wet performance can be maintained even in a state where the tread portion 2 is worn to a certain degree.

The number of pitches in the entire tire circumference (number of units each composed of the first land portion 5 and the first inclined groove 3 in the entire tire circumference) is, for example, 70 to 90 and preferably 75 to 85. Accordingly, steering stability on a dry road surface and snow traction are improved in a well-balanced manner.

### EXAMPLES

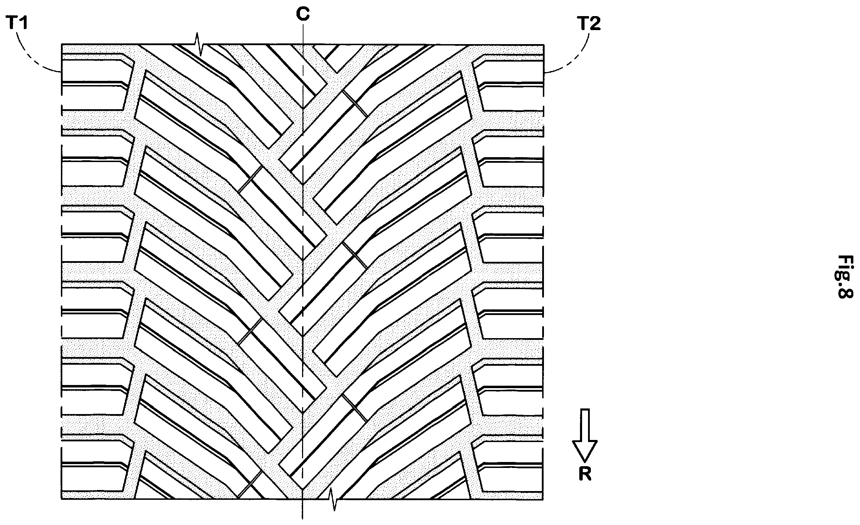

As Examples, pneumatic tires with a size of 205/55R16 having the basic pattern in FIG. 1 were produced as test tires. In each Example, the maximum recessed amount of each recess was 10% to 25% of the maximum length of the first land portion. In addition, as Comparative Example 1, a tire having a pattern shown in FIG. 8 was produced as a test tire. As shown in FIG. 8, the tire of Comparative Example 1 does not include the recess of the present invention. In addition, as Comparative Examples 2 and 3, tires having the basic pattern in FIG. 1 and having a maximum recessed amount of each recess that is outside the range in the present invention were produced as test tires. These test tires have substantially the same configuration except for the above-described matters. Each test tire was tested for steering stability on a dry road surface and snow traction. The common specifications and the test methods for the respective test tires are as follows.
Mount rim: 16×6.5
Tire internal pressure: 250 kPa for all wheels
Test vehicle: front-wheel-drive car having an engine displacement of 2000 cc
Tire mounted position: all wheels

### <Steering Stability on Dry Road Surface>

Sensory evaluation was made by a driver for steering stability when the above test vehicle ran on a dry road surface. As for the results, a higher score indicates that the steering stability is better.

### <Snow Traction>

Sensory evaluation was made by a driver for traction when the above test vehicle ran on a snowy road surface. As for the results, a higher score indicates that the snow traction is better.

The test results are shown in Table 1.

**[Table 1]**

| | Comp. Ex. 1 | Comp. Ex. 2 | Comp. Ex. 3 | Ex. 1 | Ex. 2 | Ex. 3 | Ex. 4 | Ex. 5 |
|---|---|---|---|---|---|---|---|---|
| Drawing showing tread portion | FIG. 8 | FIG. 1 | FIG. 1 | FIG. 1 | FIG. 1 | FIG. 1 | FIG. 1 | FIG. 1 |
| Maximum recessed amount da of recess /maximum length La of first land portion (%) | - | 5 | 30 | 18 | 10 | 15 | 20 | 25 |
| Steering stability on dry road surface (score) | 100 | 100 | 95 | 100 | 100 | 100 | 100 | 100 |
| Snow traction (score) | 100 | 102 | 112 | 109 | 105 | 107 | 109 | 110 |

As shown in Table 1, as a result of the tests, it is confirmed that the tires of the Examples have improved snow traction while maintaining steering stability on a dry road surface.

## Claims

1. A tire (1) comprising a tread portion (2) having a designated rotation direction (R), wherein
the tread portion (2) includes a first tread end (T1), a second tread end (T2), a plurality of first inclined grooves (3) extending at least from the first tread end (T1) toward a tire equator (C) so as to be inclined toward a leading edge side in the rotation direction (R), a plurality of second inclined grooves (4) extending at least from the second tread end (T2) toward the tire equator (C) so as to be inclined toward the leading edge side in the rotation direction (R), and a plurality of first land portions (5) demarcated by the plurality of first inclined grooves (3), and
each of the plurality of first land portions (5) includes a tread surface (5s), a first side wall (11) on the leading edge side in the rotation direction (R), and a second side wall (12) on a trailing edge side in the rotation direction (R),
**characterized in that** at least one first land portion (5) of the plurality of first land portions (5) is provided with at least one recess (15) formed by locally recessing the first side wall (11),
the recess (15) is open in the tread surface (5s),
in a plan view of the first land portion (5), a maximum recessed amount (da) of the recess (15) in a direction orthogonal to a longitudinal direction of the first inclined groove (3) is 10% to 25% of a maximum length (La) of the first land portion (5) in the direction orthogonal to the longitudinal direction, and
the at least one first land portion (5) has a chamfered portion (23) formed at least partially between the second side wall (12) and the tread surface (5s).

2. The tire (1) according to claim 1, wherein, in the plan view of the first land portion (5), the recess (15) includes a portion whose length in the longitudinal direction continuously decreases from the first side wall (11) toward the second side wall (12).

3. The tire (1) according to claim 1 or 2, wherein a plurality of the recesses (15) are provided in each first land portion (5).

4. The tire (1) according to claim 3, wherein a maximum length (L1) in the longitudinal direction of the recess (15) provided closest to the first tread end (T1) among the plurality of the recesses (15) is larger than a maximum length (L2, L3) in the longitudinal direction of the other recess (15).

5. The tire (1) according to claim 1 or 2, wherein a maximum depth (d2) of the recess (15) from the tread surface (5s) is 50% to 80% of a maximum depth (d1) of the first inclined groove (3).

6. The tire (1) according to claim 1 or 2, wherein, in the plan view of the first land portion (5), an opening area of the recess (15) is 2.5% to 5.0% of an area of the tread surface (5s) of the one first land portion (5).

7. The tire (1) according to claim 1 or 2, wherein a land ratio of the tread portion (2) in a virtual 80% worn state where the tread portion (2) is uniformly worn to 80% of the maximum depth (d1) of the first inclined groove (3) is 100% to 110% of a land ratio of the tread portion (2) in a non-worn state.

8. The tire (1) according to claim 1, wherein the second side wall (12) includes a non-chamfered portion (24) connected to the tread surface (5s) without the chamfered portion (23).

9. The tire (1) according to claim 1, wherein, in the plan view of the first land portion (5), an area of the chamfered portion (23) is 10% to 15% of an area of the tread surface (5s) of the one first land portion (5).

10. The tire (1) according to claim 1 or 2, wherein
the first land portion (5) is provided with at least one through sipe (35) connecting the first inclined grooves (3) adjacent to each other in a tire circumferential direction, and
the through sipe (35) includes a sipe body (36) extending inward in a tire radial direction from the tread surface (5s) and having a width (W4) of less than 1.5 mm, and a wide portion (37) located inward of the sipe body (36) in the tire radial direction and having a width (W5) of not less than 1.5 mm.

11. The tire (1) according to claim 10, wherein the width (W5) of the wide portion (37) of the through sipe (35) is 2.5 to 4.0 times the width (W4) of the sipe body (36).

12. The tire (1) according to claim 10, wherein the recess (15) is provided only on the first tread end (T1) side with respect to the through sipe (35).

13. The tire (1) according to claim 1 or 2, wherein
the first land portion (5) is provided with at least one inclined sipe (25) extending along the longitudinal direction, and
the inclined sipe (25) has a chamfered portion (28) provided on an edge thereof on the leading edge side in the rotation direction (R).

14. The tire (1) according to claim 13, wherein the inclined sipe (25) has no chamfered portion provided at an edge thereof on the trailing edge side in the rotation direction (R).

## Patentansprüche

1. Reifen (1), umfassend einen Laufflächenabschnitt (2) mit einer bestimmten Drehrichtung (R), wobei
der Laufflächenabschnitt (2) ein erstes Laufflächenende (T1), ein zweites Laufflächenende (T2), eine Vielzahl von ersten geneigten Rillen (3), die sich zumindest von dem ersten Laufflächenende (T1) zu einem Reifenäquator (C) erstrecken, so dass sie zu einer Vorderkantenseite in der Drehrichtung (R) geneigt sind, eine Vielzahl von zweiten geneigten Rillen (4), die sich zumindest von dem zweiten Laufflächenende (T2) zu dem Reifenäquator (C) erstrecken, so dass sie zu der Vorderkantenseite in der Drehrichtung (R) geneigt sind, und eine Vielzahl von ersten Landabschnitten (5) umfasst, die durch die Vielzahl von ersten geneigten Rillen (3) abgegrenzt sind, und
jeder der Vielzahl von ersten Landabschnitten (5) eine Laufflächen-Oberfläche (5s), eine erste Seitenwand (11) auf der Vorderkantenseite in der Drehrichtung (R) und eine zweite Seitenwand (12) auf einer Hinterkantenseite in der Drehrichtung (R) umfasst,
**dadurch gekennzeichnet, dass** zumindest ein erster Landabschnitt (5) der Vielzahl von ersten Landabschnitten (5) mit zumindest einer Vertiefung (15) versehen ist, die durch lokales Vertiefen der ersten Seitenwand (11) gebildet ist,
die Vertiefung (15) in der Laufflächen-Oberfläche (5s) offen ist,
in einer Draufsicht des ersten Landabschnitts (5) ein maximaler vertiefter Betrag (da) der Vertiefung (15) in einer Richtung orthogonal zu einer Längsrichtung der ersten geneigten Rille (3) 10 % bis 25 % einer maximalen Länge (La) des ersten Landabschnitts (5) in der Richtung orthogonal zu der Längsrichtung beträgt, und
der zumindest eine erste Landabschnitt (5) einen abgeschrägten Abschnitt (23) aufweist, der zumindest teilweise zwischen der zweiten Seitenwand (12) und der Laufflächen-Oberfläche (5s) gebildet ist.

2. Reifen (1) nach Anspruch 1, wobei in der Draufsicht des ersten Landabschnitts (5) die Vertiefung (15) einen Abschnitt umfasst, dessen Länge in der Längsrichtung von der ersten Seitenwand (11) zu der zweiten Seitenwand (12) kontinuierlich abnimmt.

3. Reifen (1) nach Anspruch 1 oder 2, wobei eine Vielzahl der Vertiefungen (15) in jedem ersten Landabschnitt (5) vorgesehen ist.

4. Reifen (1) nach Anspruch 3, wobei eine maximale Länge (L1) in der Längsrichtung der Vertiefung (15), die am nächsten zu dem ersten LaufflächenEnde (T1) unter der Vielzahl der Vertiefungen (15) vorgesehen ist, größer als eine maximale Länge (L2, L3) in der Längsrichtung der anderen Vertiefung (15) ist.

5. Reifen (1) nach Anspruch 1 oder 2, wobei eine maximale Tiefe (d2) der Vertiefung (15) von der Laufflächen-Oberfläche (5s) 50 % bis 80 % einer maximalen Tiefe (d1) der ersten geneigten Rille (3) beträgt.

6. Reifen (1) nach Anspruch 1 oder 2, wobei in der Draufsicht des ersten Landabschnitts (5) eine Öffnungsfläche der Vertiefung (15) 2,5 % bis 5,0 % einer Fläche der Laufflächen-Oberfläche (5s) des einen ersten Landabschnitts (5) beträgt.

7. Reifen (1) nach Anspruch 1 oder 2, wobei ein Landverhältnis des Laufflächenabschnitts (2) in einem virtuellen 80 % abgenutzten Zustand, in dem der Laufflächenabschnitt (2) gleichmäßig zu 80 % der maximalen Tiefe (d1) der ersten geneigten Rille (3) abgenutzt ist, 100 % bis 110 % eines Landverhältnisses des Laufflächenabschnitts (2) in einem nicht abgenutzten Zustand beträgt.

8. Reifen (1) nach Anspruch 1, wobei die zweite Seitenwand (12) einen nicht abgeschrägten Abschnitt (24) umfasst, der mit der Laufflächen-Oberfläche (5s) ohne den abgeschrägten Abschnitt (23) verbunden ist.

9. Reifen (1) nach Anspruch 1, wobei in der Draufsicht des ersten Landabschnitts (5) eine Fläche des abgeschrägten Abschnitts (23) 10 % bis 15 % einer Fläche der Laufflächen-Oberfläche (5s) des einen ersten Landabschnitts (5) beträgt.

10. Reifen (1) nach Anspruch 1 oder 2, wobei
der erste Landabschnitt (5) mit mindestens einem durchgehenden Feinschnitt (35) versehen ist, der die ersten geneigten Rillen (3), die in einer Reifenumfangsrichtung benachbart zueinander sind, verbindet, und
der durchgehende Feinschnitt (35) einen Feinschnittkörper (36), der sich nach innen in einer Reifenradialrichtung von der Laufflächen-Oberfläche (5s) erstreckt und eine Breite (W4) von weniger als 1,5 mm aufweist, und einen breiten Abschnitt (37) umfasst, der sich innen von dem Feinschnittkörper (36) in der Reifenradialrichtung befindet und eine Breite (W5) von nicht weniger als 1,5 mm aufweist.

11. Reifen (1) nach Anspruch 10, wobei die Breite (W5) des breiten Abschnitts (37) des durchgehenden Feinschnitts (35) das 2,5- bis 4,0-fache der Breite (W4) des Feinschnittkörpers (36) beträgt.

12. Reifen (1) nach Anspruch 10, wobei die Vertiefung (15) nur auf der Seite des ersten Laufflächenendes (T1) in Bezug auf den durchgehenden Feinschnitt (35) vorgesehen ist.

13. Reifen (1) nach Anspruch 1 oder 2, wobei
der erste Landabschnitt (5) mit mindestens einem geneigten Feinschnitt (25) versehen ist, der sich entlang der Längsrichtung erstreckt, und
der geneigte Feinschnitt (25) einen abgeschrägten Abschnitt (28) aufweist, der an einer Kante davon auf der Vorderkantenseite in der Drehrichtung (R) vorgesehen ist.

14. Reifen (1) nach Anspruch 13, wobei der geneigte Feinschnitt (25) keinen abgeschrägten Abschnitt aufweist, der an einer Kante davon auf der Hinterkantenseite in der Drehrichtung (R) vorgesehen ist.

## Revendications

1. Pneumatique (1) comprenant une portion formant bande de roulement (2) ayant une direction de rotation par conception (R), dans lequel
la portion formant bande de roulement (2) inclut une première extrémité de bande de roulement (T1), une seconde extrémité de bande de roulement (T2), une pluralité de premières rainures inclinées (3) s'étendant au moins depuis la première extrémité de bande de roulement (T1) vers un équateur de pneumatique (C) de manière à être inclinées vers un côté de bord avant dans la direction de rotation (R), une pluralité de secondes rainures inclinées (4) s'étendant au moins depuis la seconde extrémité de bande de roulement (T2) vers l'équateur de pneumatique (C) de manière à être inclinées vers le côté de bord avant dans la direction de rotation (R), et une pluralité de premières portions en relief (5) délimitées par la pluralité de premières rainures inclinées (3), et
chacune de la pluralité de premières portions en relief (5) inclut une surface de bande de roulement (5s), une première paroi latérale (11) sur le côté de bord avant dans la direction de rotation (R), et une seconde paroi latérale (12) sur un côté de bord arrière dans la direction de rotation (R),
**caractérisé en ce que**
au moins une première portion en relief (5) de la pluralité de premières portions en relief (5) est dotée d'au moins un évidement (15) formé en évidant localement la première paroi latérale (11),
l'évidement (15) est ouvert dans la surface de bande de roulement (5s),
dans une vue en plan de la première portion en relief (5), une quantité évidée maximum (da) de l'évidement (15) dans une direction orthogonale à une direction longitudinale de la première rainure inclinée (3) est de 10 % à 25 % d'une longueur maximum (La) de la première portion en relief (5) dans la direction orthogonale à la direction longitudinale, et
ladite au moins une première portion en relief (5) a une portion chanfreinée (23) formée au moins partiellement entre la seconde paroi latérale (12) et la surface de bande de roulement (5s).

2. Pneumatique (1) selon la revendication 1, dans lequel, dans la vue en plan de la première portion en relief (5), l'évidement (15) inclut une portion dont une longueur dans la direction longitudinale diminue en continu depuis la première paroi latérale (11) vers la seconde paroi latérale (12).

3. Pneumatique (1) selon la revendication 1 ou 2, dans lequel une pluralité d'évidement (15) sont prévus dans chaque première portion en relief (5).

4. Pneumatique (1) selon la revendication 3, dans lequel une longueur maximum (L1) dans la direction longitudinale de l'évidement (15) prévu le plus près de la première extrémité de bande de roulement (T1) parmi la pluralité d'évidements (15) est plus grande qu'une longueur maximum (L2, L3) dans la direction longitudinale de l'autre évidement (15).

5. Pneumatique (1) selon la revendication 1 ou 2, dans lequel une profondeur maximum (d2) de l'évidement (15) depuis la surface de bande de roulement (5s) est de 50 % à 80 % d'une profondeur maximum (d1) de la première rainure inclinée (3).

6. Pneumatique (1) selon la revendication 1 ou 2, dans lequel, dans la vue en plan de la première portion en relief (5), une aire d'ouverture de l'évidement (15) est de 2,5 % à 5,0 % d'une aire de la surface de bande de roulement (5s) de ladite une première portion en relief (5).

7. Pneumatique (1) selon la revendication 1 ou 2, dans lequel un rapport de relief de la portion formant bande de roulement (2) dans un état virtuel d'usure à 80 % où la portion formant bande de roulement (2) est uniformément usée à 80 % de la profondeur maximum (d1) de la première rainure inclinée (3) est de 100 % à 110 % d'un rapport de relief de la portion formant bande de roulement (2) dans un état non usé.

8. Pneumatique (1) selon la revendication 1, dans lequel la seconde paroi latérale (12) inclut une portion non chanfreinée (24) connectée à la surface de bande de roulement (5s) sans la portion chanfreinée (23).

9. Pneumatique (1) selon la revendication 1, dans lequel, dans la vue en plan de la première portion en relief (5), une aire de la portion chanfreinée (23) est de 10 % à 15 % d'une aire de la surface de bande de roulement (5s) de ladite une première portion en relief (5).

10. Pneumatique (1) selon la revendication 1 ou 2, dans lequel
la première portion en relief (5) est dotée d'au moins une fente traversante (35) connectant les premières rainures inclinées (3) adjacentes les unes aux autres dans une direction circonférentielle du pneumatique, et
la fente traversante (35) inclut un corps de fente (36) s'étendant vers l'intérieur dans une direction radiale du pneumatique depuis la surface de bande de roulement (5s) et ayant une largeur (W4) inférieure à 1,5 mm, et une portion large (37) située à l'intérieur du corps de fente (36) dans la direction radiale du pneumatique et ayant une largeur (W5) qui n'est pas inférieure à 1,5 mm.

11. Pneumatique (1) selon la revendication 10, dans lequel la largeur (W5) de la portion large (37) de la fente traversante (35) est 2,5 à 4,0 fois la largeur (W4) du corps de fente (36).

12. Pneumatique (1) selon la revendication 10, dans lequel l'évidement (15) est prévu uniquement sur le côté de la première extrémité de bande de roulement (T1) par rapport à la fente traversante (35).

13. Pneumatique (1) selon la revendication 1 ou 2, dans lequel
la première portion en relief (5) est dotée d'au moins une fente inclinée (25) s'étendant le long de la direction longitudinale, et
la fente inclinée (25) a une portion chanfreinée (28) prévue sur un bord de celle-ci sur le côté de bord avant dans la direction de rotation (R).

14. Pneumatique (1) selon la revendication 13, dans lequel la fente inclinée (25) n'a aucune portion chanfreinée prévue au niveau d'un bord de celle-ci sur le côté de bord arrière dans la direction de rotation (R).
